# EUROPEAN PATENT APPLICATION

(11) **EP 2 879 088 A1**
(43) Date of publication of application: **03.06.2015**
(21) Application number: 13822888.7
(22) Date of filing: 10.04.2013
(51) Int. Cl.: G06Q 50/30, G06Q 10/06

(54) **DATA OUTPUT DEVICE, DATA OUTPUT METHOD, AND PROGRAM**

(30) Priority: 24.07.2012 JP 2012164191
(71) Applicant: NEC Corporation, Tokyo 108-8001 (JP)
(72) Inventor: ANDO, Tomohito, Tokyo 108-8001 (JP)
(74) Representative: Vossius & Partner Patentanwälte Rechtsanwälte mbB
(86) International application number: PCT/JP2013/002448
(87) International publication number: WO 2014/016999

(57) **Abstract**

A data output device has an output means that arranges a plurality of objects, which indicate each of a plurality of pieces of travel task information including a departure point, a destination, a departure date and time, and an arrival date and time of a travel task, on a graph in which one axis represents a date and time or a time and the other axis represents the sum of a first amount of time that it takes for crew members at a predetermined base location to travel to the departure point of a target travel task specified by travel task information and a second amount of time that it takes for crew members arrived at the destination of the travel task to travel to the base location, and outputs the graph.

## Description

### [Technical Field]

The present invention relates to a data output device, a data output method, and a program.

### [Background Art]

PTL 1 discloses a technology for displaying a schedule of a crew member of an aircraft on a Gantt chart.

### [Citation List]

### [Patent Literature]

PTL 1: Japanese Laid-open Patent Publication No. 11-353369

### [Summary of Invention]

### [Technical Problem]

Crew members of an aircraft have a base in a predetermined base location (for example, the Haneda airport) and board various flights. When the crew members board a flight in which a departure point and a base location are different from each other, the crew members travel from the base location to the departure point before boarding and board the flight. When the destination of the flight is different from the base location, the crew members travel from the destination to the base location after the flight.

Therefore, considering the effort of the crew members per flight, it is necessary to consider effort for such travel as well as the effort for each flight.

Conventionally, there is no technology for intuitively grasping the relative difference of effort for a plurality of flights in consideration of effort for the aforementioned travel.

A Gantt chart is suitable for displaying predetermined limited pieces of information and grasping the information. However, it is not suitable for collectively displaying a plurality of pieces of information and grasping a complete view of the information. That is, the Gantt chart is not suitable for intuitively grasping the relative difference of effort for a plurality of flights.

The aforementioned problems may occur in business requiring travel with a vehicle, such as a train service and a boat service, as well as a flight of an aircraft.

Accordingly, an object of the present invention is to provide a technology for intuitively grasping the relative difference of effort for a plurality of travel tasks (flights, taking a car, getting on board a ship or the like). This considers effort for travel from a base location to a departure point, which is performed in order to board a predetermined travel task (hereinafter, simply referred to as a "travel task") such as flights, taking a car, and getting on board, and/or travel from a destination to the base location after boarding the predetermined travel task.

### Solution to Problem

According to the present invention, there is provided a data output device including an output means that arranges a plurality of objects, which indicate each of a plurality of pieces of travel task information including a departure point, a destination, a departure date and time, and an arrival date and time of a travel task, on a graph in which one axis represents a date and time or a time and the other axis represents a time including any one of the following (A) to (E) or a log thereof, and outputs the graph.

(A): A first amount of time that it takes for crew members at a predetermined base location to travel to the departure point of a target travel task specified by the travel task information.
(B): A second amount of time that it takes for the crew members arrived at the destination of the target travel task to travel to the base location.
(C): Sum of the first amount of time and the second amount of time
(D): Time obtained by adding a travel time of the target travel task itself to a time indicated by any one of (A) to (C).
(E): Time obtained by adding at least one of a waiting time at the departure point of the target travel task and a waiting time at the destination of the target travel task to a time indicated by any one of (A) to (D).

Furthermore, according to the present invention, there is provided a program causing a computer to function as an output means that arranges a plurality of objects, which indicate each of a plurality of pieces of travel task information including a departure point, a destination, a departure date and time, and an arrival date and time of a travel task, on a graph in which one axis represents a date and time or a time and the other axis represents a time including any one of (A) to (E) above or a log thereof, and outputs the graph.

Furthermore, according to the present invention, there is provided a data output method including an output step of arranging a plurality of objects, which indicate each of a plurality of pieces of travel task information including a departure point, a destination, a departure date and time, and an arrival date and time of a travel task, on a graph in which one axis represents a date and time or a time and the other axis represents a time including any one of (A) to (E) above or a log thereof, and outputting the graph.

### [Advantageous Effects of Invention]

With the present invention, it is possible to intuitively grasp the relative difference of effort for a plurality of travel tasks in consideration of effort for travel of a travel task crew member from a base location to a departure point and/or travel from a destination to the base location after predetermined travel task business.

### [Brief Description of Drawings]

The above-described objects, other objects, features and advantages will be further apparent from the preferred embodiments described below, and the accompanying drawings in which:
Fig. 1 is an example of a functional block diagram of a data output device of the present embodiment;
Fig. 2 is an example of a functional block diagram of a data output device of the present embodiment;
Fig. 3 is an example of a first graph of the present embodiment;
Fig. 4 is an example of a functional block diagram of a data output device of the present embodiment;
Fig. 5 is an example of a functional block diagram of a data output device of the present embodiment;
Fig. 6 is an example of a first graph of the present embodiment;
Fig. 7 is an example of a functional block diagram of a data output device of the present embodiment;
Fig. 8 is an example of a functional block diagram of a data output device of the present embodiment; and
Fig. 9 is an example of a first graph of the present embodiment.

### [Description of Embodiments]

Exemplary embodiments of the present invention will be described below with reference to the accompanying drawings.

A device of the present exemplary embodiment is realized by an arbitrary combination of hardware and software with focus on a CPU of an arbitrary computer, a memory, a program (also including a program downloaded from a storage medium such as a CD, a server on the Internet or the like, in addition to a program stored in advance in the memory from the step of shipping the device) loaded to the memory, a storing unit such as a hard disk that stores the program, and an interface for a network connection. It is understood by those skilled in the art that various modifications exist in realizing method and device thereof.

Functional block diagrams used in descriptions of the present exemplary embodiment illustrate blocks in units of functions other than configurations in units of hardware. These diagrams illustrate that each device is to be realized from one instrument, however, a realizing means thereof is not limited thereto. That is, the realizing means may have configurations physically divided or configurations logically divided.

### «First Exemplary Embodiment»

First, the overview of a first exemplary embodiment of the present invention will be described below.

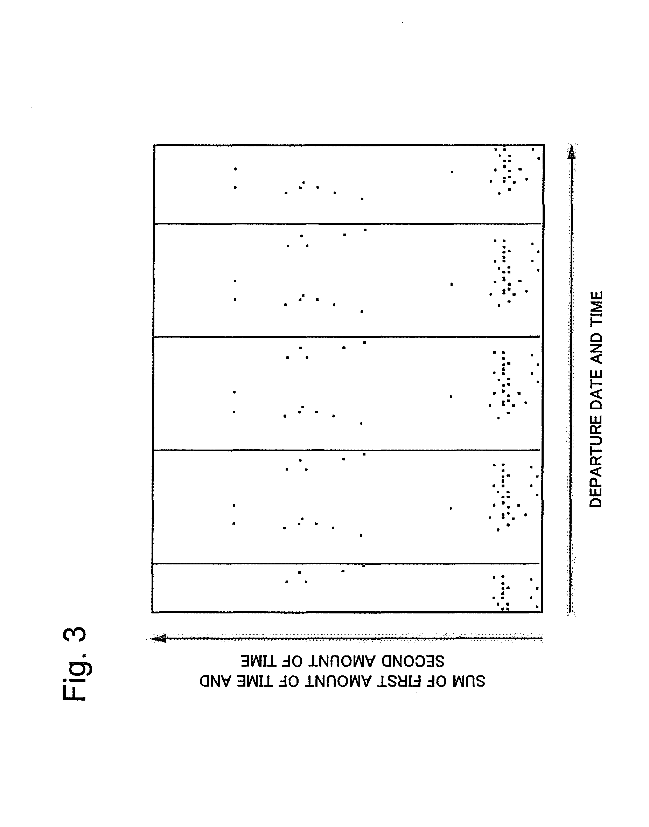

A data output device of the present exemplary embodiment can display a graph as illustrated in Fig. 3, for example, on a display. In the graph illustrated in Fig. 3, a horizontal axis represents a departure date and time of a flight. A vertical axis represents the sum of a time that it takes to travel from a base location to a departure point, which is performed in order to board a flight, and a time that it takes to travel from a destination to the base location after boarding the flight. On the graph, dots indicating each flight are displayed. In addition, a detailed scale is not illustrated.

Flights (dots) positioned at an upper portion of the graph represent that the sum is large, as compared with flights (dots) positioned at a lower portion of the graph. That is, the flights (dots) positioned at the upper portion of the graph represent that effort for travel from the base location to the departure point, which is performed in order to board a flight, and travel from the destination to the base location after boarding a predetermined flight is large, as compared with the flights (dots) positioned at the lower portion of the graph.

According to such a graph, positions in a vertical direction are observed, so that it is possible to intuitively grasp a flight that requires large effort for travel from the base location to the departure point, which is performed in order to board a flight, and travel from the destination to the base location after boarding the flight, as compared with other flights.

By observing the degree of distribution of points in the vertical direction, it is possible to intuitively grasp the ratio of flight that require large effort for travel from the base location to the departure point, which is performed in order to board a flight, and/or travel from the destination to the base location after boarding the flight, and flight that require small effort for the travel from the base location to the departure point, which is performed in order to board the flight, and/or the travel from the destination to the base location after boarding the flight. Furthermore, the horizontal axis is aligned to be observed, so that it is possible to grasp the difference (trend) of the ratio due to the difference of a departure date and time.

As described above, according to the present embodiment, in consideration of effort for travel from the base location to the departure point, which is performed in order to board a predetermined flight, and travel from the destination to the base location after boarding the predetermined flight, it is possible to intuitively grasp the relative difference of effort for a plurality of flights.

The configuration of the data output device of a first exemplary embodiment of the present invention will be described below.

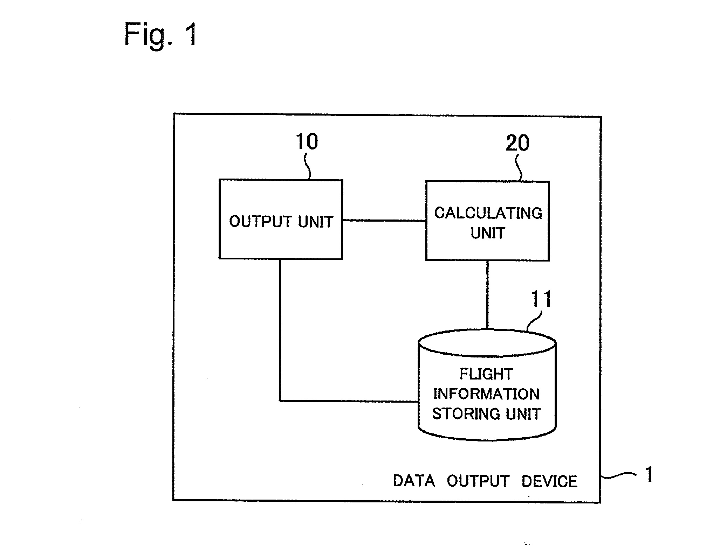

Fig. 1 is an example of a functional block diagram of the data output device of the present embodiment. As illustrated in Fig. 1, a data output device 1 of the present exemplary embodiment includes an output unit 10, a calculating unit 20, and a flight information storing unit 11. Hereinafter, the configuration of each element will be described below.

The flight information storing unit 11 stores flight information including a departure point, a destination, a departure date and time, an arrival date and time of a flight. In addition, the flight information may include other pieces of information, for example, model identification information for identifying the model of each flight. Hereinafter, a flight specified by each of flight information will be referred to as a "target flight".

The output unit 10 arranges a plurality of objects (hereinafter, referred to as "flight objects") indicating each of a plurality of pieces of flight information on a graph, and outputs the graph. The plurality of flight objects can be considered to indicate each of a plurality of target flights. In addition, as an output means by the output unit 10, all output devices such as printers can be employed in addition to displays.

In a graph in which the flight objects are arranged, one axis represents a date and time (for example, a departure date and time or an arrival date and time of a flight) and the other axis represents a "travel time" that is a time including any one of the following (A) to (E) or a log thereof. In addition, instead of the date and time, a time (for example, a departure time or an arrival time of a flight) including no date may also be employed. In such a case, a graph may be generated for each date. Hereinafter, such a graph will be referred to as a "first flight".

(A): A first amount of time that it takes for crew members at a predetermined base location to travel to a departure point of a target flight.
(B): A second amount of time that it takes for the crew members arrived at the destination of the target flight to travel to the base location.
(C): Sum of the first amount of time and the second amount of time.
(D): Time obtained by adding a flight time of the target flight itself to a time indicated by any one of (A) to (C).
(E): Time obtained by adding at least one of a waiting time at the departure point of the target flight and a waiting time at the destination of the target flight to a time indicated by any one of (A) to (D).

The calculating unit 20 calculates a time of any one of (A) to (E) or a log thereof for each flight information by using each of the plurality of pieces of flight information. The output unit 10 arranges flight objects at predetermined positions on the first graph for each flight information (for each target flight) by using the time calculated by the calculating unit 20 and the flight information stored in the flight information storing unit 11.

Hereinafter, each of (A) to (E) will be described in detail.

### <(A): A first amount of time that it takes for crew members at a predetermined base location to travel to a departure point of a target flight >

The predetermined base location is any one of a plurality of airports. Employing a certain airport as the base location is a design item, but, for example, the Haneda airport may be employed as the base location.

The first amount of time includes a time that it takes to travel to the departure point of the target flight from the base location on one or a plurality of first flights different from the target flight. For example, the first amount of time may be a corresponding flight time. The flight time can be calculated as a time from a departure date and time of a flight to an arrival date and time of the flight.

For example, it is assumed that the base location has been the Haneda airport and the target flight has been from (the departure point) the Nagoya airport to (the destination) the Hiroshima airport. In such a case, crew members, who will board the target flight at the base location, travel to the departure point (the Nagoya airport) of the target flight from the base location (the Haneda airport) on one flight, which is performed before the target flight, or by changing a plurality of flights. The first amount of time includes a flight time in such travel. When the base location coincides with the departure point of the target flight, the first amount of time is 0.

The first amount of time may also include a waiting time (hereinafter, referred to as a "first inter-flight waiting time") among a plurality of first flights when the crew members have traveled to the departure point of the target flight from the base location on the plurality of first flights. For example, the first amount of time may also include the sum of the flight time included in the aforementioned first amount of time and the first inter-flight waiting time. The first inter-flight waiting time can be calculated as a time from an arrival date and time of a previous flight to a departure date and time of a next flight.

For example, it is assumed that the base location has been the Haneda airport and the target flight has been from (the departure point) the Nagoya airport to (the destination) the Hiroshima airport. When traveling from the base location (the Haneda airport) to the departure point (the Nagoya airport) of the target flight in sequence of the Haneda airport, the Shizuoka airport, and the Nagoya airport and by changing two flights, the first inter-flight waiting time is generated at a connection location (the Shizuoka airport). The first amount of time may also include such a first inter-flight waiting time.

The calculating unit 20 calculates such a first amount of time for each of flight information by using a plurality of pieces of flight information.

For example, the calculating unit 20 specifies one flight or a combination of a plurality of flights (hereinafter, referred to as a "first optimal path"), in which a time that it takes to travel from the base location to the departure point of the target flight is minimum, by using flight information of a flight that is performed before the target flight. The calculating unit 20 may also calculate the aforementioned first amount of time by using the flight information of the specified first optimal path.

Furthermore, the calculating unit 20 specifies one flight or a combination of a plurality of flights, in which a flight time from the base location to the departure point of the target flight is minimum, as the first optimal path by using flight information of a flight that is performed before the target flight. The calculating unit 20 may also calculate the aforementioned first amount of time by using the flight information of the specified first optimal path.

In the case of specifying a combination of a plurality of flights as the first optimal path and calculating the first amount of time on the specified plurality of flights, the calculating unit 20 may specify a combination of the plurality of flights, in which the first inter-flight waiting time is equal to or more than a predetermined time, as the first optimal path.

Hereinafter, the concept that "the first inter-flight waiting time is equal to or more than the predetermined time" will be described below. In the case of changing flights, a connection time, including such as travel in airports, checking in, is necessary. Furthermore, there is a case in which the crew members having finished a certain flight service are prohibited from boarding a next flight within a predetermined time in accordance with a rule of a company or the like. In consideration of such a point, a minimum value (for example, 30 minutes, one hour, two hours or the like) of the first inter-flight waiting time can be decided in advance, and can be stored in the calculating unit 20. In addition, the minimum value of the first inter-flight waiting time is a design item.

When searching for the combination of the plurality of flights that is the first optimal path, the calculating unit 20 calculates a time from a previous flight arrival date and time to a next flight departure date and time, and determines whether the time is equal to or more than the minimum value of the first inter-flight waiting time. When the time is smaller than the minimum value of the inter-flight waiting time, the calculating unit 20 excludes a path including the time as connection from candidates of the first optimal path.

The calculating unit 20 may also specify one flight or a combination of a plurality of flights, which satisfies the following, as the first optimal path.

That is, the calculating unit 20 may specify, as the first optimal path, one flight or a combination of a plurality of flights in which a waiting time up to the departure date and time of the target flight is equal to or more than a predetermined time and the sum of the first amount of time and the waiting time at the departure point of the target flight is minimum. The "predetermined time" is a design item that can be decided in the same manner as that of the minimum value of the first inter-flight waiting time. Moreover, the predetermined time is a waiting time up to the departure date and time of the target flight after arriving at the departure point of the target flight on a first flight.

The calculating unit 20, for example, may specify a first optimal flight and calculate the first amount of time by using flight information of a plurality of flights and the Dijkstra's algorithm.

A time, different from a flight time from the base location to the departure point of the target flight and the first inter-flight waiting time and other times regarding travel from a predetermined base location to the departure point of the target flight, may be included in the first amount of time.

### <(B): A second amount of time that it takes for crew members arrived at the destination of the target flight to travel to the base location >

The second amount of time includes a time that it takes to travel from the destination of the target flight to the base location on one or a plurality of second flights different from the target flight. For example, the second amount of time may be a corresponding flight time.

For example, it is assumed that the base location has been the Haneda airport and the target flight has been from (the departure point) the Nagoya airport to (the destination) the Hiroshima airport. In such a case, crew members at the destination after finishing the target flight should travel from the destination (the Hiroshima airport) to the base location (the Haneda airport) on one flight, which is performed after the target flight, or by changing a plurality of flights. The second amount of time includes a flight time in such travel. When the base location coincides with the destination of the target flight, the second amount of time is 0.

The second amount of time may also include a waiting time (a second inter-flight waiting time) among a plurality of second flights when the crew members have traveled from the departure point of the target flight to the base location on the plurality of second flights. For example, the second amount of time may also include the sum of the flight time included in the aforementioned second amount of time and the second inter-flight waiting time. The second inter-flight waiting time can be calculated as a time from an arrival date and time of a previous flight to a departure date and time of a next flight.

For example, it is assumed that the base location has been the Haneda airport and the target flight has been from (the departure point) the Nagoya airport to (the destination) the Hiroshima airport. When traveling from the destination (the Hiroshima airport) of the target flight to the base location (the Haneda airport) in sequence of the Hiroshima airport, the Shizuoka airport, and the Haneda airport by changing two flights, the second inter-flight waiting time is generated at a connection location (the Shizuoka airport). The second amount of time may also include such an inter-flight waiting time.

The calculating unit 20 calculates such a second amount of time for each of flight information by using a plurality of pieces of flight information.

For example, the calculating unit 20 specifies one flight or a combination of a plurality of flights (hereinafter, referred to as a "second optimal path"), in which a time that it takes to travel from the destination of the target flight to the base location is minimum, by using flight information of a flight that is performed after the target flight. The calculating unit 20 may also calculate the aforementioned second amount of time by using the flight information of the specified second optimal path.

The calculating unit 20 specifies one flight or a combination of a plurality of flights (hereinafter, referred to as the "second optimal path"), in which a flight time from the destination of the target flight to the base location is minimum, by using flight information of a flight that is performed after the target flight. The calculating unit 20 may also calculate the aforementioned second amount of time by using the flight information of the specified second optimal path.

In the case of specifying a combination of a plurality of flights as the second optimal path and calculating the second amount of time on the specified plurality of flights, the calculating unit 20 may specify a combination of a plurality of flights, in which the second inter-flight waiting time is equal to or more than a predetermined time, as the second optimal path.

Hereinafter, the concept that "the second inter-flight waiting time is equal to or more than the predetermined time" will be described below. In the case of changing flights, a connection time including travel in airports, checking in or the like is necessary. Furthermore, there is a case in which the crew members having finished a service of a certain flight are prohibited from boarding a next flight within a predetermined time in accordance with a rule of a company or the like. In consideration of such a point, a minimum value (for example, 30 minutes, one hour, two hours or the like) of the second inter-flight waiting time can be decided in advance, and can be held in the calculating unit 20. In addition, the minimum value of the second inter-flight waiting time is a design item.

When searching for the combination of the plurality of flights that is the second optimal path, the calculating unit 20 calculates a time from a flight arrival date and time to a next flight departure date and time, and determines whether the time is equal to or more than the minimum value of the second inter-flight waiting time. When the time is smaller than the minimum value of the second inter-flight waiting time, the calculating unit 20 excludes a path including such connection from candidates of the second optimal path.

The calculating unit 20 may specify one flight or a combination of a plurality of flights, which satisfies the following, as the second optimal path.

That is, the calculating unit 20 may specify, as the second optimal path, one flight or a combination of a plurality of flights in which a waiting time from the destination to the departure date and time of the second flight is equal to or more than a predetermined time and the sum of the second amount of time and the waiting time at the destination of the target flight is minimum. The "predetermined time" is a waiting time up to the departure date and time of the second flight from the destination after finishing the target flight and arriving at the destination of the target flight, and is a design item that can be decided in the same manner as that of the minimum value of the second inter-flight waiting time.

The calculating unit 20, for example, may specify a second optimal flight and calculate the second amount of time by using flight information of a plurality of flights and the Dijkstra's algorithm.

A time, different from a flight time from the destination of the target flight to the base location and the second inter-flight waiting time and other times regarding travel from the destination of the target flight to the base location, may be included in the second amount of time.

### <(C): Sum of the first amount of time and the second amount of time >

The calculating unit 20 can calculate the first amount of time and the second amount of time for each target flight (for each flight information), and then add the first amount of time and the second amount of time, thereby calculating the sum of the first amount of time and the second amount of time for each target flight.

### <(D): Time obtained by adding a flight time of the target flight itself to a time indicated by any one of (A) to (C)>

The flight time of the target flight itself is a time from the departure date and time and the arrival date and time of the target flight.

The calculating unit 20 can calculate the time of any one of (A) to (C) for each target flight (for each flight information), and then add the flight time of each flight to the calculated times, thereby calculating the time obtained by adding the flight time of the target flight itself to the time indicated by any one of (A) to (C).

### <(E): Time obtained by adding at least one of a waiting time at the departure point of the target flight and a waiting time at the destination of the target flight to a time indicated by any one of (A) to (D)>

The waiting time at the departure point of the target flight is a time from an arrival date and time of arrival at the departure point on a first flight to a departure date and time of the target flight. The waiting time at the destination of the target flight is a time from an arrival date and time of arrival at the destination on the target flight to a departure date and time at which a second flight departs from the destination.

The calculating unit 20 calculates the time of any one of (A) to (D) for each target flight (for each flight information). After the calculation, the calculating unit 20 adds at least one of the waiting time at the departure point of the target flight and the waiting time at the destination of the target flight to the calculated times. In this way, the calculating unit 20 can calculate the time obtained by adding at least one of the waiting time at the departure point of the target flight and the waiting time at the destination of the target flight to the time indicated by any one of (A) to (D).

Hereinafter, with reference to Fig. 3, the first graph output by the output unit 10 will be described in detail below. In the illustrated first graph, the horizontal axis represents a departure date and time. In addition, the horizontal axis may represent an arrival date and time, a departure time, or an arrival time. In the illustrated first graph, the vertical axis represents the sum (C) of the first amount of time and the second amount of time. In addition, the vertical axis may represent other travel times (the time of (A), (B), (D) or (E)) or a log thereof. A detailed scale is not illustrated.

In the illustrated first graph, flight objects indicating each flight information are indicated by dots. In addition, the configuration of the flight object is not specially limited, and another configuration such as a mark and a diagram may be employed. For example, the flight object may have a shape including the concept of length such as a line and a rectangle. By using the length of each flight object, the long and the short of a flight time of each flight may be indicated. For example, each flight object can be arranged on the first graph such that the horizontal axis represents a time or a date and time, one end in the longitudinal direction of each flight object is positioned to indicate a departure time or a departure date and time, and the other end is positioned to indicate an arrival time or an arrival date and time. Consequently, the lengths of the flight objects are compared with one another, so that it is possible to intuitively grasp the long and the short of each flight time.

The flight (a flight specified by the flight object, the same hereinafter) positioned at the upper portion of the first graph represents that a travel time (the time of the vertical axis) indicated by any one of (A) to (E) is long, as compared with the flight positioned at the lower portion thereof. On the other hand, the flight positioned at the lower portion of the first graph represents that the travel time is short, as compared with the flight positioned at the upper portion thereof.

In such a graph, for a flight that requires large effort as compared with other flights, positions in a vertical direction can be observed. In this way, it is possible to intuitively grasp effort for travel from the base location to the departure point, which is performed in order to board a flight, and/or travel from the destination to the base location after boarding the flight.

In the graph, the degree of distribution of points in the vertical direction can be observed. In this way, it is possible to intuitively grasp the ratio of flight that require large effort for travel from the base location to the departure point, which is performed in order to board a flight and/or travel from the destination to the base location after boarding the flight, and flight that require small effort for the travel from the base location to the departure point, which is performed in order to board the flight and/or the travel from the destination to the base location after boarding the flight. Furthermore, the horizontal axis is aligned to be observed, so that it is possible to grasp the difference (trend) of the ratio due to the difference of a departure date and time (or an arrival date and time, a departure time, an arrival time or the like).

Moreover, the setting of the vertical axis is changed within the range to be taken according to necessity, so that it is possible to grasp effort for flights from various angles.

As described above, according to the present embodiment, in consideration of effort for travel from the base location to the departure point before boarding a flight, and travel from the destination to the base location after boarding the flight, it is possible to intuitively grasp the relative difference of effort for a plurality of flights.

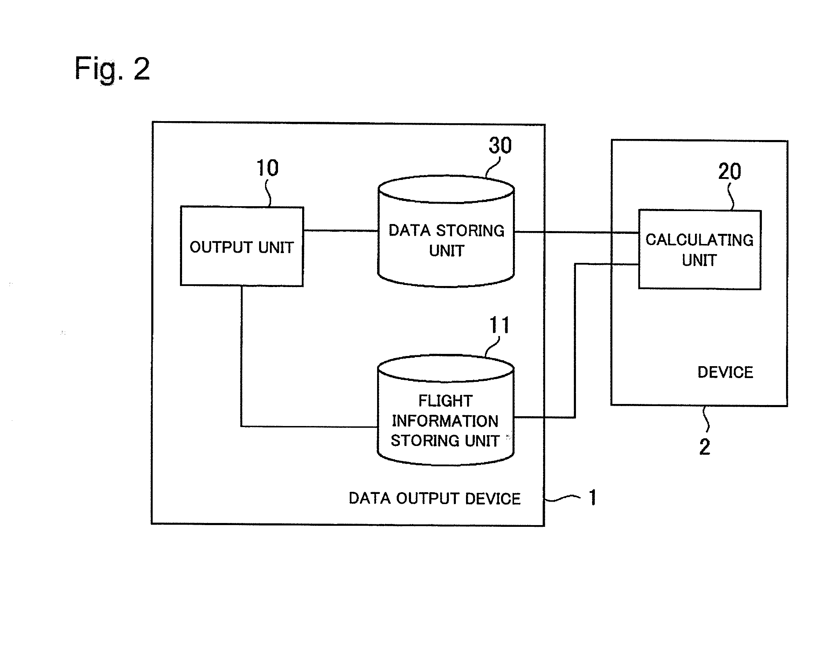

Hereinafter, a modification of the present exemplary embodiment will be described below. Fig. 2 is an example of a functional block diagram of a data output device of the modification. As illustrated in Fig. 2, a data output device 1 of the example includes the output unit 10, a data storing unit 30, and the flight information storing unit 11. In the case of the example, the calculating unit 20 is provided in a device 2 different from the output device 1. Data calculated by the calculating unit 20 is transmitted to the output device 1 via wired and/or wireless communication, and is stored in the data storing unit 30. The output unit 10 outputs the aforementioned information by using the data stored in the data storing unit 30, that is, the data calculated by the calculating unit 20 and the flight information held in the flight information storing unit 11.

So far, the case in which the travel task is the flight of an aircraft has been described as an example; however, the present invention can also be applied to the aforementioned other travel tasks in the same manner. The assumption is applied to all of the following embodiments in the same manner.

According to the above description, a description for the invention regarding the following program and data output method is also provided.

A program causing a computer to function as an output means that arranges a plurality of objects, which indicate each of a plurality of pieces of travel task information including a departure point, a destination, a departure date and time, and an arrival date and time of a travel task, on a graph in which one axis represents a date and time or a time and the other axis represents a time including any one of (A) to (E) or a log thereof, and outputs the graph.

A data output method in which a computer performs an output step of arranging a plurality of objects, which indicate each of a plurality of pieces of travel task information including a departure point, a destination, a departure date and time, and an arrival date and time of a travel task, on a graph in which one axis represents a date and time or a time and the other axis represents a time including any one of (A) to (E) or a log thereof, and outputting the graph.

### «Second Exemplary Embodiment»

In general, crew members depart from a base location and return to the base location again via a plurality of flights on one-time work. As a method for assigning a flight to the crew members, there is a method for grouping a plurality of flights in units of one-time work and then assigning the crew members to each group. According to the second exemplary embodiment of the present invention, it is possible to grasp the ratio by which flight that require a relative long travel time and flight that require a relative short travel time are included in the plurality of flights included in the groups assigned to the crew members, the travel time being indicated by any one of (A) to (E) above. Moreover, according to the present embodiment, it is possible to intuitively grasp the trend or the like of the plurality of flights, which will be described below.

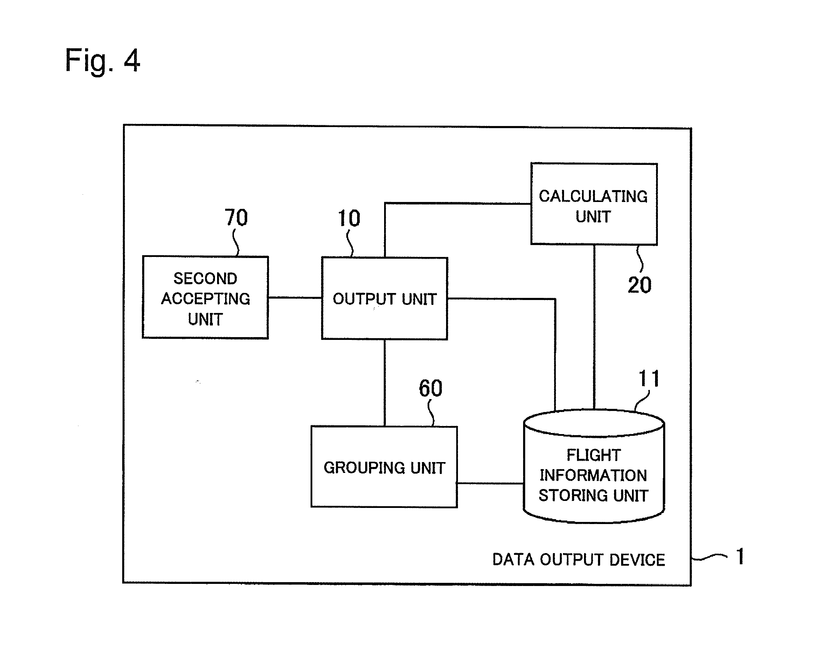

Fig. 4 illustrates an example of a functional block diagram of a data output device of the present embodiment. As illustrated in Fig. 4, a data output device 1 of the present exemplary embodiment includes the output unit 10, the calculating unit 20, the flight information storing unit 11, and a grouping unit 60. Moreover, the data output device 1 may also include a second accepting unit 70.

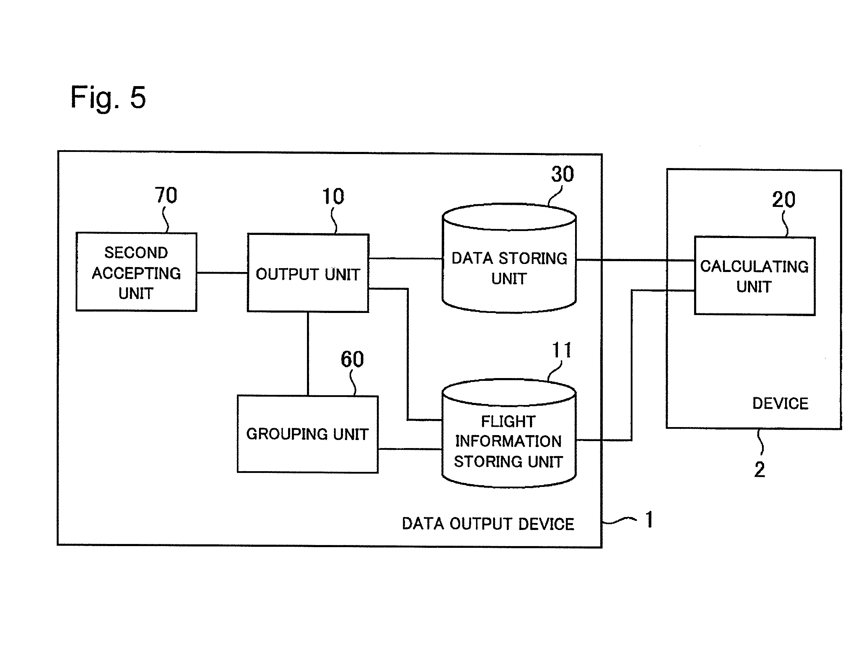

Fig. 5 illustrates another example of a functional block diagram of a data output device of the present embodiment. As illustrated in Fig. 5, a data output device 1 of the example includes the output unit 10, the data storing unit 30, the flight information storing unit 11, and the grouping unit 60. Moreover, the data output device 1 may also include the second accepting unit 70. In addition, the example has the same configuration as that of Fig. 2 described in the first embodiment.

Hereinafter, the configurations of the output unit 10, the grouping unit 60, and the second accepting unit 70 will be described below. In addition, since the configurations of the calculating unit 20, the data storing unit 30, and the flight information storing unit 11 are the same as those of the first embodiment, a description thereof will be omitted in order to avoid redundancy.

The grouping unit 60 groups a plurality of pieces of flight information in units of one-time work of crew members. That is, the grouping unit 60 groups a plurality of pieces of flight information on flights to which the crew members have not been decided.

As well as a case in which the crew members board an aircraft for business (hereinafter, referred to as a "boarding flight"), there is a case in which the crew members gets on the seat of an aircraft for the purpose of simple travel (hereinafter, referred to as a "travel flight"). That is, there is a case in which the crew members depart from a base location and return to the base location again via a plurality of flights including both the boarding flight and the travel flight on one-time work. Furthermore, there is also a case in which the crew members depart from a base location and return to the base location again via a plurality of flights including only the boarding flight on one-time work.

The groups subjected to grouping by the grouping unit 60 may include only flight information on the boarding flight, or may include the flight information on the boarding flight and flight information on the travel flight. That is, the grouping unit 60 may perform the grouping process by using only the flight information on the boarding flight, or may perform the grouping process by using both the flight information on the boarding flight and the flight information on the travel flight.

The flight information on the boarding flight is flight information on a flight to which the crew members have not been decided, and the flight information on the travel flight is flight information on a flight to which the crew members have already been decided. In addition, in the case of outputting predetermined pieces of information as assistance of the assignment of a flight to the crew members, each group includes at least one piece of the flight information on the boarding flight.

A rule of the grouping performed by the grouping unit 60 is not specially limited, and the grouping may be performed by a design item. For example, in consideration of a destination, a departure point, a connection time, a model, prohibit matters (for example, prohibition or the like of a continuous flight within a predetermined time) decided in advance or the like of each flight, flights that may be changed by one crew member may be held, and optimal (for example, temporally optimal and cost-effective optimal) paths may be grouped into one group. Furthermore, the flights that may be changed by one crew member may be held by preferentially using the flight information on the boarding flight (the flight information on a flight to which the crew members have not been decided), and only a connection place not filled with the flights may be filled using the flight information on the travel flight (the flight information on a flight to which the crew members have already been decided).

The output unit 10 displays flight objects indicating a plurality of pieces of information belonging to the same group so as to be distinguished from other flight objects. For example, the output unit 10 may display the flight objects indicating a plurality of pieces of information belonging to the same group by connecting them with lines in a connection order.

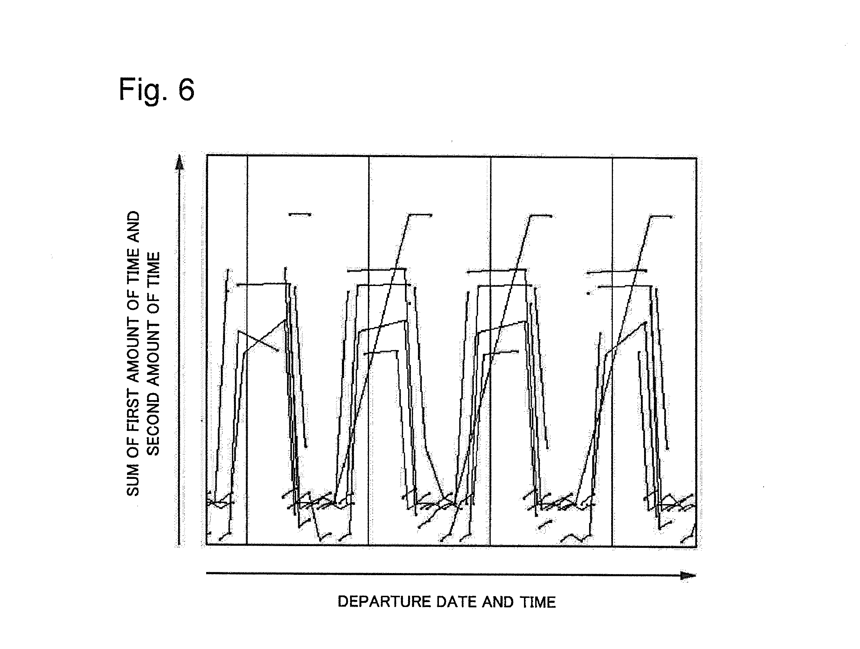

Fig. 6 illustrates one example. Fig. 6 displays a plurality of flight objects in the same manner as that of the first graph of Fig .3, and displays the plurality of flight objects for each group by connecting them with lines in a connection order.

The second accepting unit 70 accepts input for selecting one of a plurality of groups distinguishably displayed on the first graph. In the case of the present embodiment, the output unit 10 displays the first graph on a display.

A means by which the second accepting unit 70 accepts selection is not specially limited. For example, the second accepting unit 70 may accept input for selecting one flight object on a screen by using a touch panel display. Alternatively, the second accepting unit 70 may also accept input for moving a cursor displayed on a screen and input for selecting one flight object by using a mouse, a keyboard, an operation button or the like, or may also accept one flight object by using another means. In such a case, the second accepting unit 70 regards the acceptance as the selection of a group to which the selected flight object belongs. In addition, in the case of outputting the first graph in the mode illustrated in Fig. 6, the second accepting unit 70 may accept input for selecting a line connecting between the flight objects, thereby accepting input for selecting one group.

The output unit 10 displays a group, of which the selection has been accepted by the second accepting unit 70, so as to be distinguished from other groups. A distinguishing display means is not specially limited. For example, the output unit 10 may display flight objects of a selected group with emphasis (with flicker, with a change in a color or the like), or may display the flight objects of the selected group and a line connecting them with emphasis (with flicker, with a change in a color or the like).

According to the present embodiment, it is possible to realize the operation and effect equal to those of the first embodiment.

From the above, it is possible to easily grasp the ratio by which flights that require large effort (that it takes a long travel time) and flights that require small effort are included in a plurality of flights included in a group assigned to crew members. Furthermore, it is possible to intuitively grasp the difference of trend among the plurality of flights. Depending on necessity, it is possible to perform adjustment such as re-grouping.

So far, the example, in which a group to which the crew members have not been decided is displayed so as to be distinguished from other groups on the first graph, has been described. According to a modification, a group, which has been subjected to grouping and to which the crew members in charge have been already decided, can also be displayed so as to be distinguished from other groups on the first graph. Furthermore, a group to which the crew members have not been decided and a group to which the crew members have been decided can also be collectively displayed so as to be distinguished from other groups on the first graph.

Also in this way, it is possible to easily grasp the ratio by which flight that require large effort (that it takes a long travel time) and flight that require small effort are included in a plurality of flights included in each group.

### «Third Exemplary Embodiment»

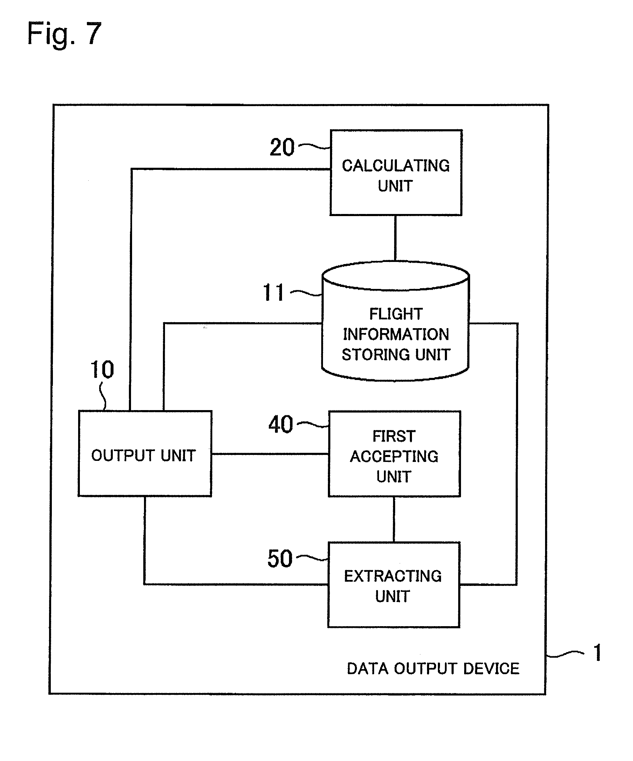

Fig. 7 illustrates an example of a functional block diagram of a data output device of the present embodiment. As illustrated in Fig. 7, a data output device 1 of a third exemplary embodiment of the present invention includes the output unit 10, the calculating unit 20, the flight information storing unit 11, a first accepting unit 40, and an extracting unit 50. Although not illustrated in Fig. 7, the data output device 1 may also include the grouping unit 60. Moreover, the data output device 1 may also include the second accepting unit 70.

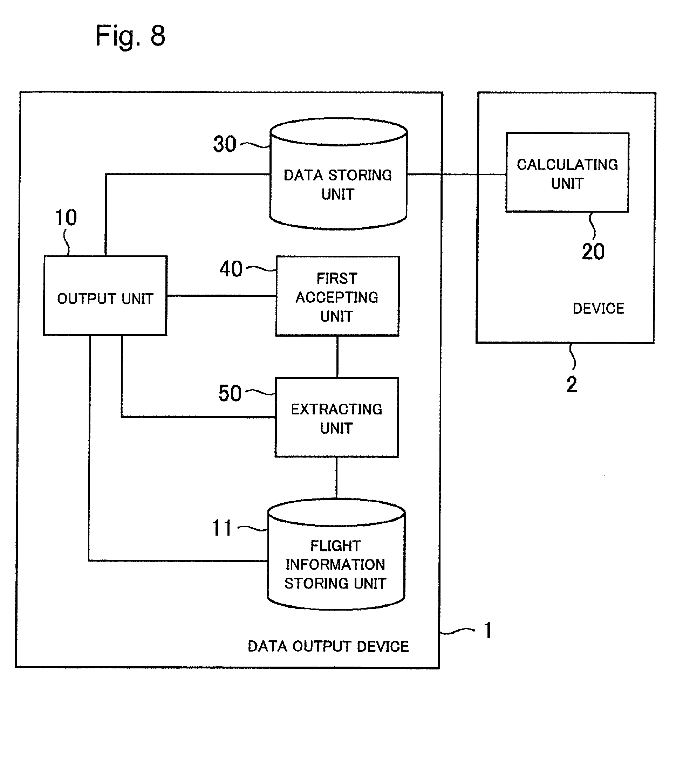

Fig. 8 illustrates another example of a functional block diagram of a data output device of the present embodiment. As illustrated in Fig. 8, a data output device 1 of the example includes the output unit 10, the data storing unit 30, the flight information storing unit 11, and the first accepting unit 40, and the extracting unit 50. Although not illustrated in Fig. 8, the data output device 1 may also include the grouping unit 60. Moreover, the data output device 1 may also include the second accepting unit 70. In addition, the example has the same configuration as that of Fig. 2 described in the first embodiment.

The first accepting unit 40 accepts input for selecting one of a plurality of flight objects displayed on the first graph. In the present embodiment, the output unit 10 displays the first graph on a display. The displayed flight objects may include only objects indicating flights (flight information) to which the crew members have not been decided. In addition, the displayed flight objects may include the objects indicating flights (flight information) to which the crew members have not been decided, and objects indicating flights (flight information) to which the crew members have been already decided. In the latter case, the flight objects may be displayed such that the type of each flight object (the flights to which the crew members have been already decided or the flights to which the crew members have not been decided) can be distinguished. A distinguishing means is not specially limited, and color coding, contrast or the like may also be used.

A means by which the first accepting unit 40 accepts selection of one flight object is not specially limited. For example, the first accepting unit 40 may accept input for selecting one flight object on a screen by using a touch panel display. Alternatively, the first accepting unit 40 may also accept input for moving a cursor displayed on a screen and input for selecting one flight object by using a mouse, a keyboard, an operation button or the like, or may also accept one flight object by using another means.

The extracting unit 50 extracts flight information of at least one of flights that may be changed from a flight (hereinafter, referred to as a "selection flight") specified by the flight object accepted by the first accepting unit 40, and a flight that may be changed to the selection flight.

The "flights that may be changed" are two flights in which a destination of a previous flight at least coincides with a departure point of a next flight. Moreover, the "flights that may be changed" may also be two flights that satisfy a minimum value of an inter-flight waiting time decided by the same concept as that of the first inter-flight waiting time and the second inter-flight waiting time described in the first embodiment. Besides, the "flights that may be changed" may also be two flights that satisfy connection prohibit matters (design items) decided in advance.

The output unit 10 displays flight objects indicating the flight information extracted by the extracting unit 50 so as to be distinguished from other objects.

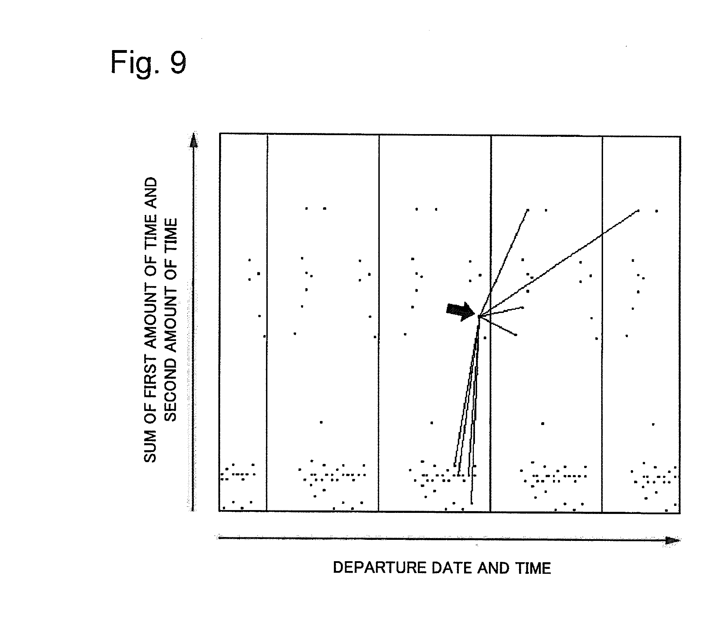

Fig. 9 illustrates one example. Fig. 9 displays a plurality of flight objects in the same manner as that of the first graph of Fig. 3, and illustrates a plurality of lines extending toward the plurality of flight objects from a selected flight object (indicated by an arrow in Fig. 9). Flight objects positioned at the ends of the lines extending from the selected flight object (indicated by an arrow in Fig. 9) are flight objects indicating the flight information extracted by the extracting unit 50.

The means that displays the flight objects indicating the flight information extracted by the extracting unit 50 so as to be distinguished from other objects is not limited thereto, and for example, technique such as emphasis display (flicker display, a color change or the like) may also be used.

According to the present exemplary embodiment as described above, it is possible to realize the operation and effect equal to those of the first and second embodiments.

It is possible to intuitively grasp the ratio by which flight that require relatively large effort (a travel time) and flight that require relatively small effort are included in a plurality of flights that may be connected to a predetermined flight.

According to a modification of the present embodiment, when the first accepting unit 40 accepts selection of one flight object, flight information on the flight object may also be displayed on a display.

### «Additional Remark»

According to the above descriptions, descriptions of the following inventions are provided.

### <Invention 1>

A data output device including an output means that arranges a plurality of objects, which indicate each of a plurality of pieces of travel task information including a departure point, a destination, a departure date and time, and an arrival date and time of a travel task, on a graph in which one axis represents a date and time or a time and the other axis represents a time including any one of the following (A) to (E) or a log thereof, and outputs the graph.
(A): A first amount of time that it takes for crew members at a predetermined base location to travel to the departure point of a target travel task specified by the travel task information.
(B): A second amount of time that it takes for the crew members arrived at the destination of the target travel task to travel to the base location.
(C): Sum of the first amount of time and the second amount of time.
(D): Time obtained by adding a travel time of the target travel task itself to a time indicated by any one of (A) to (C).
(E): Time obtained by adding at least one of a waiting time at the departure point of the target travel task and a waiting time at the destination of the target travel task to a time indicated by any one of (A) to (D).

### <Invention 2>

In the data output device according to the invention 1,
the first amount of time includes a time that it takes to travel from the base location to the departure point of the target travel task on one or a plurality of the first travel tasks different from the target travel task, and
the second amount of time includes a time that it takes to travel from the destination of the target travel task to the base location on one or a plurality of the second travel tasks different from the target travel task.

### <Invention 3>

In the data output device according to the invention 2,
the first amount of time includes a waiting time between a plurality of the first travel tasks when traveling from the base location to the departure point of the target travel task on the plurality of the first travel tasks, and
the second amount of time includes a waiting time between a plurality of the second travel tasks when traveling from the destination of the target travel task to the base location on the plurality of the first travel tasks.

### <Invention 4>

In the data output device according to the invention 2 or 3,
the data output device further includes a calculating means that calculates a time including the first amount of time of (A) to (E) above by using each of the plurality of pieces of travel task information, and
the calculating means specifies one travel task or a combination of the plurality of travel tasks, in which the time that it takes to travel from the base location to the departure point of the target travel task is minimum, for each target travel task, and calculates the first amount of time on the specified travel task.

### <Invention 5>

In the data output device according to any one of the inventions 2 to 4,
the data output device further includes a calculating means that calculates a time including the second amount of time of (A) to (E) above by using each of the plurality of pieces of travel task information, and
the calculating means specifies one travel task or a combination of the plurality of travel tasks, in which the time that it takes to travel from the destination of the target travel task to the base location is minimum, for each target travel task, and calculates the second amount of time on the specified travel task.

### <Invention 6>

In the data output device according to the invention 4 dependent on the invention 3,
when the calculating means specifies the combination of the plurality of travel tasks and calculates the first amount of time on the plurality of specified travel tasks, the calculating means specifies the combination of the plurality of travel tasks in which a waiting time between the travel tasks is equal to or more than a predetermined time.

### <Invention 7>

In the data output device according to the invention 5 dependent on the invention 3,
when the calculating means specifies the combination of the plurality of travel tasks and calculates the second amount of time on the plurality of specified travel tasks, the calculating means specifies the combination of the plurality of travel tasks in which a waiting time between the travel tasks is equal to or more than a predetermined time.

### <Invention 8>

In the data output device according to any one of the inventions 1 to 7,
the data output device further includes a first accepting means that accepts input for selecting one of the plurality of objects displayed on the graph, and
an extracting means that extracts the travel task information of at least one of the travel task that may be changed from a selection travel task specified by the object accepted by the first accepting means and the travel task that may be changed to the selection travel task,
wherein the output means displays the object indicating the travel task information extracted by the extracting means so as to be distinguished from other objects.

### <Invention 9>

In the data output device according to any one of the inventions 1 to 8,
the data output device further includes a grouping means that groups the plurality of pieces of travel task information in units of one-time work of a crew member, and
the output means displays the plurality of objects indicating the plurality of pieces of travel task information belonging to the same group so as to be distinguished from the other objects.

### <Invention 10>

In the data output device according to the invention 9,
the output means displays the plurality of objects, which indicate the plurality of pieces of travel task information belonging to the same group, by connecting them with lines in a connection order.

### <Invention 11>

In the data output device according to the invention 9 or 10,
the data output device further includes a second accepting means that accepts input for selecting one of the plurality of groups distinguishably displayed on the graph, and
the output means displays the selected group so as to be distinguished from the other groups.

### <Invention 12>

In the data output device according to any one of the inventions 1 to 11,
the date and time or the time of the one axis is a departure date and time, a departure time, an arrival date and time, or an arrival time of the travel task.

### <Invention 13>

In the data output device according to any one of the inventions 1 to 11,
the object has a shape including the concept of length, and a travel time of each travel task is indicated by the length.

### <Invention 14>

In the data output device according to any one of the inventions 1 to 13,
the travel task is a flight of an aircraft.

### <Invention 15>

A program causing a computer to function as an output means that arranges a plurality of objects, which indicate each of a plurality of pieces of travel task information including a departure point, a destination, a departure date and time, and an arrival date and time of a travel task, on a graph in which one axis represents a date and time or a time and the other axis represents a time including any one of the following (A) to (E) or a log thereof, and outputs the graph.
(A): A first amount of time that it takes for crew members at a predetermined base location to travel to the departure point of a target travel task specified by the travel task information.
(B): A second amount of time that it takes for the crew members arrived at the destination of the target travel task to travel to the base location.
(C): Sum of the first amount of time and the second amount of time.
(D): Time obtained by adding a travel time of the target travel task itself to a time indicated by any one of (A) to (C).
(E): Time obtained by adding at least one of a waiting time at the departure point of the target travel task and a waiting time at the destination of the target travel task to a time indicated by any one of (A) to (D).

### <Invention 15-2>

In the program according to the inventions 15,
the first amount of time includes a time that it takes to travel from the base location to the departure point of the target travel task on one or a plurality of the first travel tasks different from the target travel task, and
the second amount of time includes a time that it takes to travel from the destination of the target travel task to the base location on one or a plurality of the second travel tasks different from the target travel task.

### <Invention 15-3>

In the program according to the invention 15-2,
the first amount of time includes a waiting time between a plurality of the first travel tasks when traveling from the base location to the departure point of the target travel task on the plurality of the first travel tasks, and
the second amount of time includes a waiting time between a plurality of the second travel tasks when traveling from the destination of the target travel task to the base location on the plurality of the first travel tasks.

### <Invention 15-4>

In the program according to the invention 15-2 or 15-3,
the program causes a computer to serve as a calculating means that calculates a time including the first amount of time of (A) to (E) above by using each of the plurality of pieces of travel task information, and
causes the calculating means to specify one travel task or a combination of the plurality of travel tasks, in which the time that it takes to travel from the base location to the departure point of the target travel task is minimum, for each target travel task, and to calculate the first amount of time on the specified travel task.

### <Invention 15-5>

In the program according to any one of the inventions 15-2 to 15-4,
the program causes a computer to serve as a calculating means that calculates a time including the second amount of time of (A) to (E) above by using each of the plurality of pieces of travel task information, and
causes the calculating means to specify one travel task or a combination of the plurality of travel tasks, in which the time that it takes to travel from the destination of the target travel task to the base location is minimum, for each target travel task, and to calculate the second amount of time on the specified travel task.

### <Invention 15-6>

In the program according to the invention 15-4 dependent on the invention 15-3,
when the program causes the calculating means to specify the combination of the plurality of travel tasks and calculate the first amount of time on the plurality of specified travel tasks, the program causes the calculating means to specify the combination of the plurality of travel tasks in which a waiting time between the travel tasks is equal to or more than a predetermined time.

### <Invention 15-7>

In the program according to the invention 15-5 dependent on the invention 15-3,
when the program causes the calculating means to specify the combination of the plurality of travel tasks and calculate the second amount of time on the plurality of specified travel tasks, the program causes the calculating means to specify the combination of the plurality of travel tasks in which a waiting time between the travel tasks is equal to or more than a predetermined time.

### <Invention 15-8>

In the program according to any one of the inventions 15 to 15-7,
the program causes a computer to serve as a first accepting means that accepts input for selecting one of the plurality of objects displayed on the graph and to serve as an extracting means that extracts the travel task information of at least one of the travel task that may be changed from a selection travel task specified by the object accepted by the first accepting means and the travel task that may be changed to the selection travel task, and
causes the output means to display the object indicating the travel task information extracted by the extracting means so as to be distinguished from other objects.

### <Invention 15-9>

In the program according to any one of the inventions 15 to 15-8,
the program causes a computer to serve as a grouping means that groups the plurality of pieces of travel task information in units of one-time work of a crew member, and
causes the output means to display the plurality of objects indicating the plurality of pieces of travel task information belonging to the same group so as to be distinguished from the other objects.

### <Invention 15-10>

In the program according to the invention 15-9,
the program causes the output means to display the plurality of objects, which indicate the plurality of pieces of travel task information belonging to the same group, by connecting them with lines in a connection order.

### <Invention 15-11>

In the program according to the invention 15-9 or 15-10,
the program causes a computer to serve as a second accepting means that accepts input for selecting one of the plurality of groups distinguishably displayed on the graph, and
causes the output means to display the selected group so as to be distinguished from the other groups.

### <Invention 15-12>

In the program according to any one of the inventions 15 to 15-11,
the date and time or the time of the one axis is a departure date and time, a departure time, an arrival date and time, or an arrival time of the travel task.

### <Invention 15-13>

In the program according to any one of the inventions 15 to 15-11,
the object has a shape including the concept of length, and a travel time of each travel task is indicated by the length.

### <Invention 15-14>

In the program according to any one of the inventions 15 to 15-13,
the travel task is a flight of an aircraft.

### <Invention 16>

A data output method that performs an output step of arranging a plurality of objects, which indicate each of a plurality of pieces of travel task information including a departure point, a destination, a departure date and time, and an arrival date and time of a travel task, on a graph in which one axis represents a date and time or a time and the other axis represents a time including any one of the following (A) to (E) or a log thereof, and outputting the graph.
(A): A first amount of time that it takes for crew members at a predetermined base location to travel to the departure point of a target travel task specified by the travel task information.
(B): A second amount of time that it takes for the crew members arrived at the destination of the target travel task to travel to the base location.
(C): Sum of the first amount of time and the second amount of time.
(D): Time obtained by adding a travel time of the target travel task itself to a time indicated by any one of (A) to (C).
(E): Time obtained by adding at least one of a waiting time at the departure point of the target travel task and a waiting time at the destination of the target travel task to a time indicated by any one of (A) to (D).

### <Invention 16-2>

In the data output method according to the invention 16,
the first amount of time includes a time that it takes to travel from the base location to the departure point of the target travel task on one or a plurality of the first travel tasks different from the target travel task, and
the second amount of time includes a time that it takes to travel from the destination of the target travel task to the base location on one or a plurality of the second travel tasks different from the target travel task.

### <Invention 16-3>

In the data output method according to the invention 16-2,
the first amount of time includes a waiting time between a plurality of the first travel tasks when traveling from the base location to the departure point of the target travel task on the plurality of the first travel tasks, and
the second amount of time includes a waiting time between a plurality of the second travel tasks when traveling from the destination of the target travel task to the base location on the plurality of the first travel tasks.

### <Invention 16-4>

In the data output method according to the invention 16-2 or 16-3,
the data output method further includes a calculating step of calculating a time including the first amount of time of (A) to (E) above by using each of the plurality of pieces of travel task information, and
in the calculating step, one travel task or a combination of the plurality of travel tasks, in which the time that it takes to travel from the base location to the departure point of the target travel task is minimum, is specified for each target travel task, and the first amount of time is calculated on the specified travel task.

### <Invention 16-5>

In the data output method according to any one of the inventions 16-2 to 16-4,
the data output method further includes a calculating means step of calculating a time including the second amount of time of (A) to (E) above by using each of the plurality of pieces of travel task information, and
in the calculating step, one travel task or a combination of the plurality of travel tasks, in which the time that it takes to travel from the destination of the target travel task to the base location is minimum, is specified for each target travel task, and the second amount of time is calculated on the specified travel task.

### <Invention 16-6>

In the data output method according to the invention 16-4 dependent on the invention 16-3,
in the calculating step, when the combination of the plurality of travel tasks is specified and the first amount of time is calculated on the plurality of specified travel tasks, the combination of the plurality of travel tasks, in which a waiting time between the travel tasks is equal to or more than a predetermined time, is specified.

### <Invention 16-7>

In the data output method according to the invention 16-5 dependent on the invention 16-3,
in the calculating step, when the combination of the plurality of travel tasks is specified and the second amount of time is calculated on the plurality of specified travel tasks, the combination of the plurality of travel tasks, in which a waiting time between the travel tasks is equal to or more than a predetermined time, is specified.

### <Invention 16-8>

In the data output method according to any one of the inventions 16 to 16-7,
the data output method further includes a first accepting step of accepting input for selecting one of the plurality of objects displayed on the graph, and
an extracting step of extracting the travel task information of at least one of the travel task that may be changed from a selection travel task specified by the object accepted in the first accepting step and the travel task that may be changed to the selection travel task,
wherein, in the output step, the object indicating the travel task information extracted by the extracting means is displayed so as to be distinguished from other objects.

### <Invention 16-9>

In the data output method according to any one of the inventions 16 to 16- 8,
the data output method further includes a grouping step of grouping the plurality of pieces of travel task information in units of one-time work of a crew member, and
in the output step, the plurality of objects indicating the plurality of pieces of travel task information belonging to the same group are displayed so as to be distinguished from the other objects.

### <Invention 16-10>

In the data output method according to the invention 16-9,
in the output step, the plurality of objects, which indicate the plurality of pieces of travel task information belonging to the same group, are displayed by connecting them with lines in a connection order.

### <Invention 16-11 >

In the data output method according to the invention 16-9 or 16-10,
the data output method further includes a second accepting step of accepting input for selecting one of the plurality of groups distinguishably displayed on the graph, and
in the output step, the selected group is displayed so as to be distinguished from the other groups.

### <Invention 16-12>

In the data output method according to any one of the inventions 16 to 16-11,
the date and time or the time of the one axis is a departure date and time, a departure time, an arrival date and time, or an arrival time of the travel task.

### <Invention 16-13>

In the data output method according to any one of the inventions 16 to 16-11,
the object has a shape including the concept of length, and a travel time of each travel task is indicated by the length.

### <Invention 16-14>

In the data output method according to any one of the inventions 16 to 16-13,
the travel task is a flight of an aircraft.

This application is based upon and claims the benefit of priority from Japanese Patent Application No. 2012-164191 filed on July 24, 2012, the entire contents of which are incorporated herein by reference.

## Claims

1. A data output device, comprising:
an output means for arranging a plurality of objects, which indicate each of a plurality of pieces of travel task information including a departure point, a destination, a departure date and time, and an arrival date and time of a travel task, on a graph in which one axis represents a date and time or a time and the other axis represents a time including any one of (A) to (E) below or a log of the time, and to output the graph,
(A): A first amount of time that it takes for crew members at a predetermined base location to travel to the departure point of a target travel task specified by the travel task information,
(B): A second amount of time that it takes for the crew members arrived at the destination of the target travel task to travel to the base location,
(C): Sum of the first amount of time and the second amount of time,
(D): Time obtained by adding a travel time of the target travel task itself to a time indicated by any one of (A) to (C), and
(E): Time obtained by adding at least one of a waiting time at the departure point of the target travel task and a waiting time at the destination of the target travel task to a time indicated by any one of (A) to (D).

2. The data output device according to claim 1,
wherein the first amount of time includes a time that it takes to travel from the base location to the departure point of the target travel task on one or a plurality of the first travel tasks different from the target travel task, and
the second amount of time includes a time that it takes to travel from the destination of the target travel task to the base location on one or a plurality of the second travel tasks different from the target travel task.

3. The data output device according to claim 2,
wherein the first amount of time includes a waiting time between a plurality of the first travel tasks when traveling from the base location to the departure point of the target travel task on the plurality of the first travel tasks, and
the second amount of time includes a waiting time between a plurality of the second travel tasks when traveling from the destination of the target travel task to the base location on the plurality of the first travel tasks.

4. The data output device according to claim 2 or 3, further comprising:
a calculating means for calculating a time including the first amount of time of (A) to (E) above by using each of the plurality of pieces of travel task information,
wherein the calculating means specifies one travel task or a combination of the plurality of travel tasks, in which the time that it takes to travel from the base location to the departure point of the target travel task is minimum, for each target travel task, and calculates the first amount of time on the specified travel task.

5. The data output device according to any one of claims 2 to 4, further comprising:
a calculating means for calculating a time including the second amount of time of (A) to (E) above by using each of the plurality of pieces of travel task information,
wherein the calculating means specifies one travel task or a combination of the plurality of travel tasks, in which the time that it takes to travel from the destination of the target travel task to the base location is minimum, for each target travel task, and calculates the second amount of time on the specified travel task.

6. The data output device according to claim 4,
wherein when the calculating means specifies the combination of the plurality of travel tasks and calculates the first amount of time on the plurality of specified travel tasks, the calculating means specifies the combination of the plurality of travel tasks in which a waiting time between the travel tasks is equal to or more than a predetermined time.

7. The data output device according to claim 5,
wherein when the calculating means specifies the combination of the plurality of travel tasks and calculates the second amount of time on the plurality of specified travel tasks, the calculating means specifies the combination of the plurality of travel tasks in which a waiting time between the travel tasks is equal to or more than a predetermined time.

8. The data output device according to any one of claims 1 to 7, further comprising:
a first accepting means for accepting input for selecting one of the plurality of objects displayed on the graph, and
an extracting means for extracting the travel task information of at least one of the travel task that is changed from a selection travel task specified by the object accepted by the first accepting means and the travel task that is changed to the selection travel task,
wherein the output means displays the object indicating the travel task information extracted by the extracting means so as to be distinguished from other objects.

9. The data output device according to any one of claims 1 to 8, further comprising:
a grouping means for grouping the plurality of pieces of travel task information in units of one-time work of a crew member, and
the output means displays the plurality of objects indicating the plurality of pieces of travel task information belonging to the same group so as to be distinguished from the other objects.

10. The data output device according to claim 9,
wherein the output means displays the plurality of objects, which indicate the plurality of pieces of travel task information belonging to the same group, by connecting the plurality of objects with lines in a connection order.

11. The data output device according to claim 9 or 10, further comprising:
a second accepting means for accepting input for selecting one of the plurality of groups distinguishably displayed on the graph, and
the output means displays the selected group so as to be distinguished from the other groups.

12. The data output device according to any one of claims 1 to 11,
wherein the date and time or the time of the one axis is a departure date and time, a departure time, an arrival date and time, or an arrival time of the travel task.

13. The data output device according to any one of claims 1 to 11,
wherein the object has a shape including the concept of length, and a travel time of each travel task is indicated by the length.

14. The data output device according to any one of claims 1 to 13,
wherein the travel task is a flight of an aircraft.

15. A program causing a computer to function as an output means that arranges a plurality of objects, which indicate each of a plurality of pieces of travel task information including a departure point, a destination, a departure date and time, and an arrival date and time of a travel task, on a graph in which one axis represents a date and time or a time and the other axis represents a time including any one of (A) to (E) below or a log of the time, and outputs the graph,
(A): A first amount of time that it takes for crew members at a predetermined base location to travel to the departure point of a target travel task specified by the travel task information,
(B): A second amount of time that it takes for the crew members arrived at the destination of the target travel task to travel to the base location,
(C): Sum of the first amount of time and the second amount of time,
(D): Time obtained by adding a travel time of the target travel task itself to a time indicated by any one of (A) to (C), and
(E): Time obtained by adding at least one of a waiting time at the departure point of the target travel task and a waiting time at the destination of the target travel task to a time indicated by any one of (A) to (D).

16. A data output method, comprising:
an output step of arranging a plurality of objects, which indicate each of a plurality of pieces of travel task information including a departure point, a destination, a departure date and time, and an arrival date and time of a travel task, on a graph in which one axis represents a date and time or a time and the other axis represents a time including any one of (A) to (E) below or a log of the time, and outputting the graph,
(A): A first amount of time that it takes for crew members at a predetermined base location to travel to the departure point of a target travel task specified by the travel task information,
(B): A second amount of time that it takes for the crew members arrived at the destination of the target travel task to travel to the base location,
(C): Sum of the first amount of time and the second amount of time,
(D): Time obtained by adding a travel time of the target travel task itself to a time indicated by any one of (A) to (C), and
(E): Time obtained by adding at least one of a waiting time at the departure point of the target travel task and a waiting time at the destination of the target travel task to a time indicated by any one of (A) to (D).
